# EUROPEAN PATENT APPLICATION

(11) **EP 4 053 856 A1**
(43) Date of publication of application: **07.09.2022**
(21) Application number: 20881303.0
(22) Date of filing: 27.10.2020
(51) Int. Cl.: G21K 4/00, G02B 6/02, G02B 6/036, G02B 6/44

(54) **PLASTIC SCINTILLATING FIBER AND PRODUCTION METHOD THEREFOR**

(30) Priority: 31.10.2019 JP 2019198101
(71) Applicant: Kuraray Co., Ltd., Kurashiki-shi, Okayama 710-0801 (JP)
(72) Inventor: SHINJI, Osamu, Tainai-shi, Niigata 959-2691 (JP); FUJITA, Katsuhiro, Tainai-shi, Niigata 959-2691 (JP); SONOBE, Minoru, Tainai-shi, Niigata 959-2691 (JP)
(74) Representative: Müller-Boré & Partner Patentanwälte PartG mbB
(86) International application number: PCT/JP2020/040174
(87) International publication number: WO 2021/085401

(57) **Abstract**

A plastic scintillating fiber according to an aspect of the present invention includes: an outermost peripheral layer (1) containing a fluorescent substance that emits scintillation light when it is irradiated with at least one of neutron radiation and heavy-particle radiation; a core (2) disposed inside the outermost peripheral layer (1) and containing at least one type of fluorescent substance that absorbs the scintillation light and wavelength-converts the absorbed light into light having a wavelength longer than that of the absorbed light; and a cladding layer (3) covering an outer peripheral surface of the core (2) and having a refractive index lower than that of the core (2). A wavelength shifting fiber including the core (2) and the cladding layer (3), and the outermost peripheral layer (1) covering an outer peripheral surface of the wavelength shifting fiber are integrally formed.

## Description

### Technical Field

The present invention relates to a plastic scintillating fiber and its manufacturing method.

### Background Art

A conventional plastic scintillating fiber (PSF) is a plastic fiber in which the outer peripheral surface of a core, which serves as a scintillator, is covered with a cladding layer having a refractive index lower than that of the core, and is mainly used for the detection of radiation. The core is typically made of, for example, a polymeric material in which an organic fluorescent substance is added to a base material having an aromatic ring such as polystyrene or polyvinyl toluene. The cladding layer is made of a polymeric material having a low refractive index such as polymethyl methacrylate or fluorine-containing polymethyl methacrylate.

The principle based on which radiation is detected by using a plastic scintillating fiber will be explained. The base material of the core of the scintillating fiber has an aromatic ring. When applied radiation travels across the scintillating fiber, part of its energy is absorbed by the re-emission of secondary particles and the like inside the core and emitted as ultraviolet light. When no fluorescent substance is added to the core base material, the ultraviolet light is self-absorbed by the core base material itself, so that the ultraviolet light disappears without being transmitted inside the core.

In the plastic scintillating fiber, the ultraviolet light is absorbed by the fluorescent substance added to the core base material, and light having a wavelength longer than that of the absorbed light is re-emitted. Therefore, by selecting an appropriate fluorescent substance, the ultraviolet light is converted into light having a longer wavelength such as blue light, which is less likely to be self-absorbed by the core base material, and the light having the longer wavelength is transmitted inside the fiber. The light that has been transmitted inside the fiber is detected by a detector connected to one of or both ends of the fiber.

As described above, the scintillating fiber has two functions which are emitting light associated with the detection of radiation and transmitting the light. Therefore, the scintillating fiber is used for calculating a place at which a radiation passes, for example. In such a scintillating fiber, it is important that how ultraviolet light emitted from a core should be efficiently wavelength-converted into light having a wavelength longer than that of the emitted ultraviolet light in order to transmit the light over a long distance.

Meanwhile, besides the scintillating fibers, plastic wavelength shifting fibers (WLSF) are also widely used. Wavelength shifting fibers are used, for example, in combination with plastic scintillators that emit blue light. A groove or hole is formed in a plate-like or rod-like plastic scintillator, and a wavelength shifting fiber, which absorbs blue light and converts the absorbed light into green light, is embedded in the groove or hole of the plastic scintillator.

In the case of a large detector having a large area, in some cases, it is difficult to transmit light from each of scintillators to an external photoelectric detector (e.g., a photomultiplier tube) located distant from the scintillator due to the attenuation of the light and/or the spatial constraint. In such a case, a wavelength shifting fiber that is thin, is easily bent, and is capable of transmitting light over a long distance is suitably used. It is possible to freely lay out a large number of wavelength shifting fibers up to the external photoelectric detector.

The core of the wavelength shifting fiber is made of polystyrene or a polymethyl methacrylate resin, in which a fluorescent substance for shifting a wavelength is dissolved. In the wavelength shifting fiber, scintillation light that enters therein from an external scintillator is absorbed by the fluorescent substance contained in the core, and is efficiently wavelength-converted. Further, the wavelength-converted light is transmitted inside the fiber. The scintillator which is combined with the wavelength shifting fiber is not limited to the plastic scintillators, and inorganic scintillators or the like that are highly sensitive to neutrons can also be used.

As described above, by using the wavelength shifting fiber, scintillation light emitted from large-area or long scintillators or special scintillators such as those for detecting neutrons can be easily concentrated. Further, the light, whose wavelength has been shifted by the core, can be transmitted by the wavelength shifting fiber, and such wavelength shifting fibers can be freely connected to one another up to the photoelectric detector.

Note that, for the detection of neutron radiation or heavy-particle radiation (e.g. alpha radiation), since the sensitivity of plastic scintillators made solely of plastics is low, it is difficult to detect such radiation by using such plastic scintillators. Therefore, for example, inorganic scintillators are used. Examples of the inorganic scintillators include, among others, ⁶LiF/ZnS:Ag, LiI:Eu²⁺, LiBaF₃:Ce³⁺, LiCaAlFₑ: Ce³⁺, and Li₂B₄O7:Cu⁺, as well as those disclosed in Patent Literature 1.

However, the attenuation lengths of inorganic scintillators are in the order of several millimeters and hence they are not highly transparent. That is, they cannot transmit emitted light (i.e., scintillation light) over a long distance. Further, due to the constraint in regard to the crystal size, it is difficult to transmit light to the photoelectric detector by using inorganic scintillators.

Further, as disclosed in Patent Literatures 2 and 3 etc., a sheet in which fine particles obtained by crushing an inorganic scintillator are dispersed in a transparent resin has been developed as a sheet for detecting neutron radiation or heavy-particle radiation. In such a sheet, the difference between the refractive index of the inorganic scintillator and that of the transparent resin is so large that the transparency cannot be ensured and hence the sheet itself cannot efficiently transmit light to the photoelectric detector.

Therefore, for example, in Patent Literatures 2, 3 and 4, a wavelength shifting fiber is placed along the end face or the surface of the scintillator, and light is transmitted to the photoelectric detector through the wavelength shifting fiber. By using the wavelength shifting fiber, the detection light can be transmitted over a longer distance.

Note that, in all of the Patent Literatures 2, 3 and 4, in particular, in the detection in which the spatial resolution is considered important, such as the image detection disclosed in Patent Literature 3, a large number of post-processing steps are required in order to combine scintillators with wavelength shifting fibers.

### Citation List

### Patent Literature

Patent Literature 1: Japanese Unexamined Patent Application Publication No. 2012-126854
Patent Literature 2: International Patent Publication No. WO2015/064588
Patent Literature 3: Japanese Unexamined Patent Application Publication No. 2011-141239
Patent Literature 4: Japanese Unexamined Patent Application Publication No. 2015-72227

### Summary of Invention

### Technical Problem

In a conventional plastic scintillating fiber, the core needs to be highly transparent so that the core itself emits scintillation light and transmits the emitted scintillation light to the photoelectric detector. Therefore, it is impossible to obtain a plastic scintillating fiber for detecting neutron radiation or heavy-particle radiation by adding a material that emits scintillation light when it is irradiated with neutron radiation or heavy-particle radiation.

Similarly, in a wavelength shifting fiber, the core also needs to be highly transparent in order to wavelength-convert scintillation light emitted from an external scintillator in the core and transmit the wavelength-converted light through the core. Therefore, it is impossible to obtain a plastic scintillating fiber for detecting neutron radiation or heavy-particle radiation by adding a material that emits scintillation light when it is irradiated with neutron radiation or heavy-particle radiation.

Meanwhile, in the case of a conventional scintillation detector using wavelength shifting fibers, the post-processing for combining scintillators with wavelength shifting fibers is required. Further, in the case of performing image detection, scintillators needs to be separated and combined one by one for each of a large number of wavelength shifting fibers, thus making the processing thereof significantly difficult.

The present invention has been made in view of the above-described circumstances, and an object thereof is to provide a plastic scintillating fiber by which at least one of neutron radiation and heavy particle radiation can be detected, and of which the productivity is excellent.

### Solution to Problem

A plastic scintillating fiber according to an aspect of the present invention includes:
an outermost peripheral layer containing a material that emits scintillation light when it is irradiated with at least one of neutron radiation and heavy-particle radiation;
a core disposed inside the outermost peripheral layer and containing at least one type of fluorescent substance that absorbs the scintillation light and wavelength-converts the absorbed light into light having a wavelength longer than that of the absorbed light; and
a cladding layer covering an outer peripheral surface of the core and having a refractive index lower than that of the core, in which
a wavelength shifting fiber including the core and the cladding layer, and the outermost peripheral layer covering an outer peripheral surface of the wavelength shifting fiber are integrally formed.

In the plastic scintillating fiber according to an aspect of the present invention, scintillation light is generated in the outermost peripheral layer when the plastic scintillating fiber is irradiated with neutron radiation or heavy-particle radiation. Further, the core disposed inside the outermost peripheral layer absorbs the scintillation light, wavelength-converts the absorbed light, and transmits the wavelength-converted light. Therefore, neutron radiation and heavy-particle radiation, for which the sensitivity of conventional plastic scintillating fibers is low and hence which could not be easily detected by using such plastic scintillators, can be detected. Further, the wavelength shifting fiber including the core and the cladding layer, and the outermost peripheral layer covering the outer peripheral surface of the wavelength shifting fiber are integrally formed, thus making the post-processing, which is required to combine a scintillator and a wavelength shifting fiber in the conventional technology, unnecessary. That is, it is possible to provide a plastic scintillating fiber by which at least one of neutron radiation and heavy particle radiation can be detected, and of which the productivity is excellent.

The material may be fine particles of an inorganic fluorescent substance, and the outermost peripheral layer may be made of a transparent resin in which the fine particles are dispersed. Neutron radiation and heavy-particle radiation can be detected with high sensitivity.

Further, the wavelength shifting fiber and the outermost peripheral layer may be integrally formed through a drawing process. The productivity is further improved.

Further, the cladding layer may have a multi-cladding structure including an inner cladding layer, and an outer cladding layer covering an outer peripheral surface of the inner cladding layer and having a refractive index lower than that of the inner cladding layer. The total reflection angle becomes wider, so that more intense light is obtained.

A method for manufacturing a plastic scintillating fiber according to an aspect of the present invention is a method for manufacturing a plastic scintillating fiber,
the plastic scintillating fiber including:
an outermost peripheral layer containing a fluorescent substance that emits scintillation light when it is irradiated with at least one of neutron radiation and heavy-particle radiation;
a core disposed inside the outermost peripheral layer and containing at least one type of fluorescent substance that absorbs the scintillation light and wavelength-converts the absorbed light into light having a wavelength longer than that of the absorbed light; and
a cladding layer covering an outer peripheral surface of the core and having a refractive index lower than that of the core, and
the method including:
   a process of manufacturing a preform by inserting a second cylindrical body for the cladding layer into a first cylindrical body for the outermost peripheral layer, and inserting a rod for the core into the second cylindrical body; and
   a process of drawing the preform while heating the preform.

A method for manufacturing a plastic scintillating fiber according to an aspect of the present invention is a method for manufacturing a plastic scintillating fiber,
the plastic scintillating fiber including:
an outermost peripheral layer containing a fluorescent substance that emits scintillation light when it is irradiated with at least one of neutron radiation and heavy-particle radiation;
a core having a high refractive index, disposed inside the outermost peripheral layer, and containing at least one type of fluorescent substance that absorbs the scintillation light and wavelength-converts the absorbed light into light having a wavelength longer than that of the absorbed light; and
a cladding layer covering an outer peripheral surface of the core and having a refractive index lower than that of the core, in which
the outermost peripheral layer is coated on a surface of the cladding layer.

### Advantageous Effects of Invention

According to the present invention, it is possible to provide a plastic scintillating fiber by which at least one of neutron radiation and heavy particle radiation can be detected, and of which the productivity is excellent.

### Brief Description of Drawings

Fig. 1 is a cross-sectional diagram of a plastic scintillating fiber according to a first embodiment;
Fig. 2 is a cross-sectional diagram of a plastic scintillating fiber according to a modified example of the first embodiment;
Fig. 3 is a perspective view showing a method for manufacturing a plastic scintillating fiber according to the first embodiment;
Fig. 4 is a perspective view showing an example in which scintillating fibers according to the first embodiment are applied;
Fig. 5 is a graph showing an emission spectrum of a neutron fluorescent substance LiCaAlF₆:Eu, and absorption and emission spectra of a wavelength shifting fluorescent substance BBOT; and
Fig. 6 is a graph showing an emission spectrum of an inorganic fluorescent substance ZnS:Ag, and absorption and emission spectra of a wavelength shifting fluorescent substance HOSTASOLE YELLOW 3 G.

### Description of Embodiments

Specific embodiments according to the present invention will be described hereinafter with reference to the drawings. However, the present invention is not limited to the below-shown embodiments. Further, for clarifying the explanation, the following description and drawings are simplified as appropriate.

### (First Embodiment)

### <Structure of Plastic Scintillating Fiber>

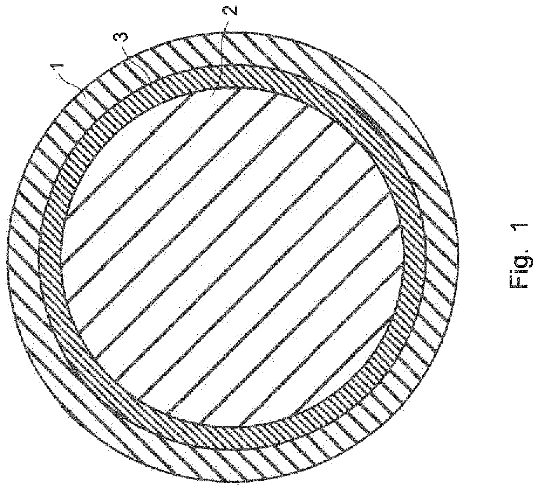

A plastic scintillating fiber according to a first embodiment of the present invention will be described with reference to Fig. 1. Fig. 1 is a cross-sectional diagram of the plastic scintillating fiber according to the first embodiment.

As shown in Fig. 1, the plastic scintillating fiber according to the first embodiment includes an outermost peripheral layer 1, a core 2, and a cladding layer 3.

The outermost peripheral layer 1 is made of a resin containing a material that emits scintillation light by at least one of neutron radiation and heavy-particle radiation (e.g., alpha radiation). For example, the outermost peripheral layer 1 is made of a transparent resin (a transparent organic polymer) in which fine particles of an inorganic fluorescent substance (an inorganic scintillator) that emits scintillation light by neutron radiation or heavy-particle radiation are dispersed.

The outermost peripheral layer 1 preferably sufficiently emits light and is sufficiently transparent to allow the scintillation light to pass through the cladding layer 3 and enter the core 2 located at the center of the fiber. Further, the outermost peripheral layer 1 does not necessarily need to be highly transparent, but is preferably as transparent and thin as possible. Even if the transparency of the outermost peripheral layer 1, which is the scintillator layer, is low, it is possible to transmit light over a long distance as long as the core 2 which transmits the light at the center of the fiber is highly transparent.

The core 2 is disposed inside the outermost peripheral layer 1, and is made of a transparent resin having a high refractive index and containing at least one type of fluorescent substance that absorbs scintillation light generated in the outermost peripheral layer 1 and converts the absorbed light into light having a wavelength longer than that of the absorbed light. The refractive index of the transparent resin of which the core 2 is made is preferably 1.5 or higher.

The cladding layer 3 covers the outer peripheral surface of the core 2 and is made of a transparent resin having a refractive index lower than that of the core 2. Note that the wavelength shifting fiber composed of the core 2 and the cladding layer 3, and the outermost peripheral layer 1 covering the outer peripheral surface of the wavelength shifting fiber are integrally formed.

In order to make the wavelength shifting fiber function as an optical fiber and transmit light over a long distance, the transparency of the cladding layer 3 is as important as the transparency of the core 2. For the long-distance transmission, the transparency of the outermost peripheral layer 1 is not so important.

In order to make the wavelength shifting fiber function as an optical fiber and transmit light over a long distance, the thickness of the cladding layer 3 is preferably from 3 µm to 100 µm, which is sufficiently thicker than the depth of evanescent waves that seeps out from the core 2 into the cladding layer 3. When the thickness of the cladding layer 3 is sufficiently thicker than the depth of the evanescent waves seeping into the cladding layer 3, the cladding layer 3 and the outermost peripheral layer 1 can be made of materials having equivalent refractive indices, or can even be made of the same transparent resin.

As for the fluorescent substance contained in the core 2, it is desirable that the absorption spectrum match the wavelength of the scintillation light generated in the outermost peripheral layer 1, and that the fluorescence spectrum, to which the absorption spectrum is shifted, be as far away from the absorption spectrum as possible. Further, the core 2 may also contain a second fluorescent substance for additional wavelength shifting in order to, for example, conform the shifted wavelength to the wavelength at which the photoelectric detector, such as a photomultiplier tube (PMT) or avalanche photodiode (APD), has good sensitivity. Note that details of the fluorescent substance will be described later.

In the plastic scintillating fiber according to the first embodiment, scintillation light is generated in the outermost peripheral layer 1 when the plastic scintillating fiber is irradiated with neutron radiation or heavy-particle radiation. Further, the core 2 disposed inside the outermost peripheral layer absorbs the scintillation light, wavelength-converts the absorbed light, and transmits the wavelength-converted light. Therefore, neutron radiation and heavy-particle radiation, for which the sensitivity of conventional plastic scintillating fibers is low and hence which could not be easily detected by using such plastic scintillators, can be detected with high sensitivity. That is, the plastic scintillating fiber according to the first embodiment is a composite-type plastic optical fiber having both the scintillation function for neutron radiation or heavy-particle radiation and the wavelength shifting function.

Further, the wavelength shifting fiber composed of the core 2 and the cladding layer 3, and the outermost peripheral layer 1 covering the outer peripheral surface of the wavelength shifting fiber are integrally formed. Therefore, there is no need for the post-processing, which is required to combine a scintillator and a wavelength shifting fiber in the conventional technology. Further, the productivity is significantly improved and the costs are reduced as compared to the conventional technology.

### <Modified Example of Plastic Scintillating Fiber>

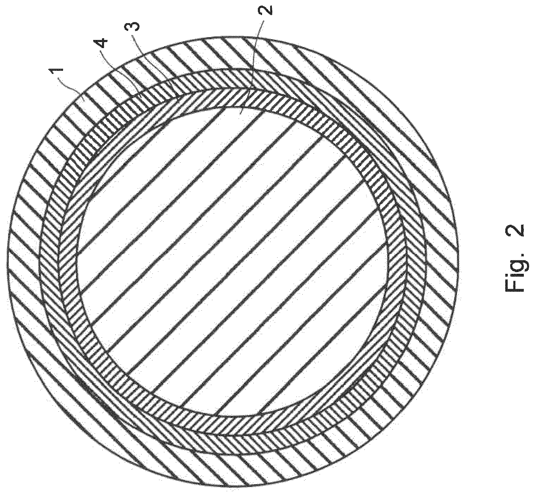

Fig. 2 is a cross-sectional diagram of a plastic scintillating fiber according to a modified example of the first embodiment. In the plastic scintillating fiber according to the modified example, the cladding layer 3 is provided as an inner cladding layer, and an additional cladding layer 4 is provided as an outer cladding layer. That is, the cladding layer has a multi-cladding structure including an inner cladding layer (the cladding layer 3) and an outer cladding layer (the cladding layer 4). The cladding layer 4 covers the outer peripheral surface of the cladding layer 3 and is made of a transparent resin having a refractive index lower than that of the cladding layer 3.

Note that re-emitted light, which has been wavelength-converted in the core 2, is isotropically radiated in a solid angle manner in the core 2. Therefore, only the light that is within the total reflection angle, which is determined based on the difference between the refractive index of the core 2 and that of the cladding layer 3 or 4 can be transmitted in the direction of the fiber. Since the plastic scintillating fiber according to the modified example includes the cladding layer 4 having a low refractive index in addition to the cladding layer 3, its total reflection angle becomes wider (the aperture NA becomes larger) than that of the plastic scintillating fiber shown in Fig. 1, so that more intense light is obtained.

### <Material for Outermost Peripheral Layer 1>

The outermost peripheral layer 1, which is the scintillator layer, is made of a resin containing a material (a fluorescent substance) that emits scintillation light when it is irradiated with at least one of neutron radiation and heavy-particle radiation (such as alpha radiation). For example, the outermost peripheral layer 1 is made of a transparent resin in which fine particles of an inorganic fluorescent substance that emits scintillation light by neutron radiation or heavy-particle radiation are uniformly or non-uniformly dispersed.

The transparent resin of which the outermost peripheral layer 1 is made is preferably thermoplastic so that it can be drawn into a thin thread by heating. Preferred examples of such transparent resins include homo-polymers and copolymers composed of any of methacrylic acid ester monomers typified by methyl methacrylate or the like, acrylic ester monomers typified by methyl acrylate, and aromatic monomers having vinyl groups typified by styrene.

The refractive index of the transparent resin of which the outermost peripheral layer 1 is made is not limited to any particular values in terms of the light transmission performance, but is preferably close to the refractive index of the dispersed inorganic fluorescent substance. This is because if the difference between the refractive index of the dispersed inorganic fluorescent substance and that of the transparent resin, which is the medium in which the inorganic fluorescent substance is dispersed, is large, the light is more scattered and hence the scintillation light generated in the outermost peripheral layer 1 does not effectively reach the core 2.

As for the fine particles of the inorganic fluorescent substance contained in the outermost peripheral layer 1, fine particles obtained by crushing crystals of an inorganic fluorescent substance are suitably used. In particular, inorganic fluorescent substances mentioned in Patent Literatures 1 and 2 may be preferable because they are not sensitive to gamma radiation and selectively emit light only by neutron radiation.

As an example, the outermost peripheral layer 1 is one that is obtained by dispersing 1 to 30 mass% of fine particles of an inorganic fluorescent substance LiCaAlF₆:Eu, which contains lithium 6, is doped with Eu, and emits scintillation light by neutron radiation, in a transparent resin. This transparent resin, in which the fine particles of the inorganic fluorescent substance are dispersed, can be suitably selected from the resins and the like used for the core 2, or for the cladding layer 3 or 4. The outermost peripheral layer 1 emits, as the scintillation light, ultraviolet light having a wavelength of 350 to 400 nm by neutron radiation.

Another example of the outermost peripheral layer 1 is one that is obtained by dispersing fine particles of an inorganic fluorescent substance ZnS:Ag, which emits scintillation light by heavy-particle radiation (such as alpha radiation), in a transparent resin. The transparent resin, in which the fine particles of the inorganic fluorescent substance are dispersed, can also be suitably selected from the resins and the like used for the core 2, or for the cladding layer 3 or 4. The outermost peripheral layer 1 emits visible light having a wavelength of 400 to 500 nm by heavy-particle radiation.

The particle diameter of the inorganic fluorescent substance dispersed in the transparent resin is preferably 0.1 to 100 µm, and more preferably 1 to 10 µm. The concentration of the dispersed inorganic fluorescent substance is preferably 1 to 50 mass%, and more preferably 5 to 30 mass%. If the concentration is too low, the light-emitting efficiency of the outermost peripheral layer 1 by neutron radiation or heavy-particle radiation deteriorates. If the concentration is too high, it is difficult to disperse the inorganic fluorescent substance in the transparent resin and/or to draw the transparent resin by heating.

Note that the inorganic fluorescent substance to be dispersed is selected as appropriate according to the neutron radiation or heavy-particle radiation to be detected, and is not limited to the above-described examples. Further, the particle diameter and the concentration of the inorganic fluorescent substance are also selected as appropriate according to the detection performance and/or the degree of difficulty of the manufacturing, and is not limited to the above-described examples. Further, the transparent resin in which the inorganic fluorescent substance is dispersed is also selected as appropriate according to the dispersibility and/or the easiness or the like of the manufacturing, and is not limited to the above-described examples.

### <Material for Core 2>

There are no restrictions on the material used for the core 2 as long as the material is a transparent resin. Among them, a homopolymer or a copolymer composed of any of methacrylic acid ester monomers typified by methyl methacrylate, acrylic ester monomers typified by methyl acrylate, and aromatic monomers having vinyl groups typified by styrene is preferred.

Among them, a copolymer composed of an aromatic monomer having a vinyl group is preferred because it has a high refractive index. The difference between the refractive index of the core 2 and that of the cladding layer 3 increases, so that the total reflection angle becomes wider. That is, of the whole light whose wavelength has been shifted inside the core 2, the light emitted in a wider angle can be transmitted, thus making it possible to obtain a scintillating fiber capable of outputting more intense light.

The wavelength shifting fluorescent substance contained in the core 2 is preferably an organic fluorescent substance having an aromatic ring and having a structure capable of resonating, and is preferably monomolecularly dissolved in the core 2. Typical examples of the fluorescent substance include 2-(4-t-butylphenyl)-5-(4-biphenyl)-1,3,4-oxadiazole (b-PBD), 2-(4-biphenyl)-5-phenyl-1,3,4-oxadiazole (PBD), para-terphenyl (PTP), para-quarterphenyl (PQP), 2,5-diphenyloxazole (PPO), 1-phenyl-3-(2,4,6-trimethylphenyl)-2-pyrazoline (PMP), and 3-hydroxyflavone (3HF) all of which absorb light having a wavelength of 250 to 350 nm.

Further, examples also include 4,4'-bis-(2,5-dimethylstyryl)-diphenyl (BDB), 2,5-bis-(5-t-butyl-benzoxazoyl)-thiophene (BBOT), 1,4-bis-(2-(5-phenyloxazolyl))benzene (POPOP), 1,4-bis-(4-methyl-5-phenyl-2-oxazolyl)benzene (DMPOPOP), 1,4-diphenyl-1,3-butadiene (DPB), and 1,6-diphenyl-1,3,5-hexatriene (DPH) all of which absorb light having a wavelength of 350 to 400 nm.

Further, specific examples include HOSTASOLE YELLOW 3G, MACROLEX FLUORESCENT YELLOW 10GN, and Kayaset Yellow SF-G all of which absorb light having a wavelength of 400 to 500 nm, and also include LUMOGEN F ORANGE 240 and LUMOGEN F RED 300 both of which absorb light having a wavelength of 500 to 600 nm.

To obtain intense light, it is preferred that the overlap between the absorption spectrum of the wavelength-shifting fluorescent substance contained in the core 2 and the emission spectrum of the inorganic fluorescent substance contained in the outermost peripheral layer 1 be large.

Only one of the aforementioned wavelength-shifting fluorescent substances may be used, or a plurality of wavelength-shifting fluorescent substances may be used in combination. For each wavelength-shifting fluorescent substance, it is preferred that a quantum yield be high and the overlap between the absorption and emission spectra be small (the Stokes shift be large). As a characteristic of plastic fibers, the longer the wavelength is, the smaller the transmission loss of visible light becomes. Therefore, a wavelength-shifting fluorescent substance that emits light having a longer wavelength is preferred, and two or more types of wavelength-shifting fluorescent substances may be used as appropriate in combination. The wavelength-shifting fluorescent substance is preferably soluble in the transparent resin of which the core 2 is made.

The concentration of the wavelength-shifting fluorescent substance is preferably 50 to 10,000 ppm as expressed in mass concentration, and more preferably 100 to 1,000 ppm, irrespective of whether only one wavelength-shifting fluorescent substance is used or a plurality of wavelength-shifting fluorescent substances are used. If the concentration is too low, the scintillation light emitted from the outermost peripheral layer 1 cannot be efficiently absorbed in the core 2. On the other hand, if the concentration is too high, the effect of the self-absorption of the fluorescent substance itself will increase. Therefore, the efficiency of the wavelength shifting decreases and/or the transmittance for the converted light decreases, so that the attenuation length deteriorates.

### <Material for Cladding Layer 3>

There are no restrictions on the material used for the cladding layer 3 as long as the material is a transparent resin having a refractive index lower than that of the core 2. Among them, a homopolymer or a copolymer composed of any of methacrylate ester monomers typified by methyl methacrylate and fluorinated monomers such as perfluoroalkyl methacrylate, or any of acrylate ester monomers typified by methyl acrylate and fluorinated monomers such as perfluoroalkyl acrylate is suitable.

### <Material for Cladding Layer 4>

Any transparent resin having a refractive index even lower than that of the cladding layer 3 may be used as the material for the cladding layer 4. The material for the cladding layer 4 can be selected from the monomers for the cladding layer 3 and the like. In particular, it is preferred to select the material from fluorine-containing monomers having a low refractive index.

Regarding these monomers, a polymer or a copolymer can be easily obtained by heat or light irradiation. Therefore, they are advantageous because it is possible to form a precise distribution of compositions, and they can be easily handled. In the polymerization, an organic peroxide or an azo compound may be added as a polymerization initiator. Typical examples of the organic peroxide include 1,1,3,3-tetramethylbutylperoxy-2-ethyl hexanoate, n-butyl-4,4-bis(t-butylperoxy)valerate, and 1,1-bis(t-butylperoxy)cyclohexane. However, there are no particular restrictions on the organic peroxide as long as it generates a radical by heat or light irradiation.

Further, mercaptan may be added as a chain transfer agent for adjusting the molecular weight. Typical examples of the mercaptan include octyl mercaptan, but there are no particular restrictions as long as it has a structure expressed as R-SH (where R represents an organic group).

### <Method for Manufacturing Plastic Scintillating Fiber>

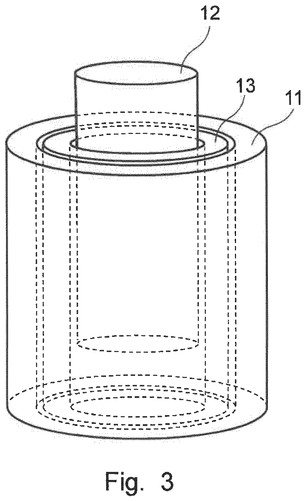

Fig. 3 is a perspective view showing a method for manufacturing a plastic scintillating fiber according to the first embodiment. Fig. 3 shows a base material (a preform) for manufacturing the plastic scintillating fiber shown in Fig. 1.

A first cylindrical body 11 is a cylindrical body made of a thermoplastic resin in which fine particles of an inorganic fluorescent substance that emits scintillation light by at least one of neutron radiation and heavy-particle radiation is dispersed. The first cylindrical body 11 will constitute the outermost peripheral layer 1 after a drawing process. Details of the method for manufacturing the first cylindrical body 11 will be described.

A rod 12 is a cylindrical body made of a transparent thermoplastic resin in which at least one type of fluorescent substance that absorbs scintillation light and converts the absorbed light into light having a wavelength longer than that of the absorbed light is dissolved. The rod 12 will constitute the core 2 after the drawing process.

A second cylindrical body 13 is a cylindrical body made of a transparent thermoplastic resin having a refractive index lower than that of the rod 12. The second cylindrical body 13 will constitute the cladding layer 3 after the drawing process.

As shown in Fig. 3, a preform is manufactured by inserting the second cylindrical body 13 into the first cylindrical body 11 and inserting the rod 12 into the second cylindrical body 13. Fig. 3 shows a state in which the rod 12 is in the process of being inserted into the second cylindrical body 13. A plastic scintillating fiber according to the first embodiment is obtained by, while heating the tip of the manufactured preform, drawing the preform into, for example, a thread having an outer diameter of 1 mm.

Note that although a gap is formed between the first cylindrical body 11 and the second cylindrical body 13, and between the second cylindrical body 13 and the rod 12 as shown in Fig. 3, the core 2, the cladding layer 3, and the outermost peripheral layer 1 are integrally formed while being tightly in contact with each other because the drawing process is performed under a reduced-pressure.

The plastic scintillating fiber according to the modified example shown in Fig. 2 can also be manufactured by a similar manufacturing method.

In the method for manufacturing a plastic scintillating fiber according to the first embodiment, a scintillator layer (the outermost peripheral layer 1), which emits light by neutron radiation or heavy-particle radiation, is integrally formed on the outer peripheral surface of the wavelength shifting fiber (the core 2 and the cladding layer 3). Therefore, the plastic scintillating fiber is capable of detecting neutron radiation or heavy-particle radiation as well as capable of transmitting light. That is, the plastic scintillating fiber has, by itself, both the function as a conventional scintillator and the function as a wavelength shifting fiber.

Therefore, there is no need for the post-processing, which is required to combine the scintillator and the wavelength shifting fiber in the conventional technology. Therefore, the productivity is significantly improved and the costs is reduced as compared to the conventional technology. In particular, in the case of image detection, there is no need to separate and combine scintillators one by one for each of wavelength shifting fibers. That is, all that has to be done is to arrange (e.g., line up) plastic scintillating fibers. Therefore, the productivity is significantly improved and the costs are reduced as compared to the conventional technology.

Note that after manufacturing the wavelength shifting fiber (the core 2 and the cladding layer 3), the scintillator layer (the outermost peripheral layer 1) may be integrally formed by a coating process (including a painting process) such as vapor deposition, dip coating, and spray coating. By this method, it is possible to add a material (a fluorescent substance) that emits scintillation light when it is irradiated with at least one of neutron radiation and heavy-particle radiation (such as alpha radiation) at a higher concentration.

### <Application Example of Plastic Scintillating Fiber>

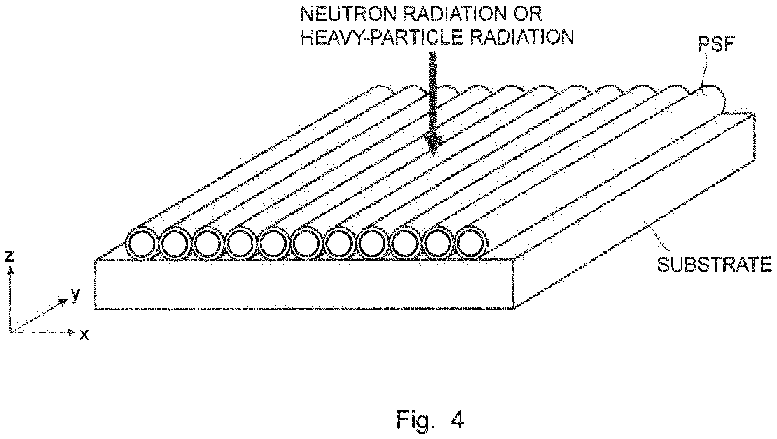

Next, an example in which the plastic scintillating fiber according to the first embodiment is applied will be described with reference to Fig. 4. Fig. 4 is a perspective view showing an example in which plastic scintillating fibers according to the first embodiment are applied. In this application example, the plastic scintillating fibers PSFs according to the first embodiment is arranged in an array on a substrate. Note that, needless to say, a right-handed xyz-orthogonal coordinate system shown in Fig. 4 is shown just for the sake of convenience for explaining the positional relation among components. In general, the z-axis positive direction is vertically upward and the xy-plane is parallel to the horizontal plane.

Each of the plastic scintillating fibers PSFs is connected to a photoelectric detector such as a photomultiplier tube (not shown), so it can detect transmitted light. By the above-described configuration, it is possible to perform, for example, one-dimensional image detection with a resolution of 1 mm.

Note that the resolution is equal to the diameter of each of the plastic scintillating fibers PSFs. Further, by preparing two arrays of such plastic scintillating fibers PSFs and stacking them on top of each other in such a manner that they are perpendicular to each other, it is also possible to perform two-dimensional image detection.

In this way, it is also possible to, by using plastic scintillating fibers according to this embodiment, easily perform image detection of neutron radiation or heavy-particle radiation with a high spatial resolution at low costs.

### [Examples]

The present invention will be described hereinafter in a more detailed manner by using examples, but is not limited by those examples at all.

### <Example 1>

After mixing and kneading fine particles of an inorganic fluorescent substance LiCaAlF₆:Eu, which contained lithium 6, was doped with Eu, and emits scintillation light by neutron radiation, in polymethyl methacrylate, a cylindrical body for an outermost peripheral layer having an outer diameter of 50 mm and an inner diameter of 40 mm (i.e., the first cylindrical body 11 in Fig. 3) was formed. The average particle diameter of the fine particles was 6.2 µm and the concentration of the fine particles was 22 mass%.

A rod for a core having a diameter of 32 mm, made of polystyrene (having a refractive index 1.59) (i.e., the rod 12 in Fig. 3) and a cylindrical body for a cladding layer having an outer diameter of 38 mm and an inner diameter of 34 mm, made of polymethyl methacrylate (having a refractive index of 1.49) (i.e., the second cylindrical body 13 in Fig. 3) were prepared. In the rod for the core, 2,5-bis-(5-t-butyl-benzoxazoyl)thiophene (BBOT) was dissolved as a wavelength-shifting fluorescent substance at a concentration of 200 mass ppm.

As shown in Fig. 3, a preform was manufactured by inserting the cylindrical body for the cladding layer into the cylindrical body for the outermost peripheral layer and inserting the rod for the core into the cylindrical body for the cladding layer. A plastic scintillating fiber according to the Example 1 was obtained by integrally drawing, while heating the tip of the preform, the preform under a reduced pressure so that the outer diameter of the drawn thread became 1 mm. This plastic scintillating fiber had the cross-sectional structure shown in Fig. 1. The outer diameter was 1,000 µm, and the diameter of the cladding layer 3 was 770 µm. The diameter of the core 2 was 680 µm, and the thickness of the outermost peripheral layer 1 was 115 µm. Further, the thickness of the cladding layer 3 was 45 µm.

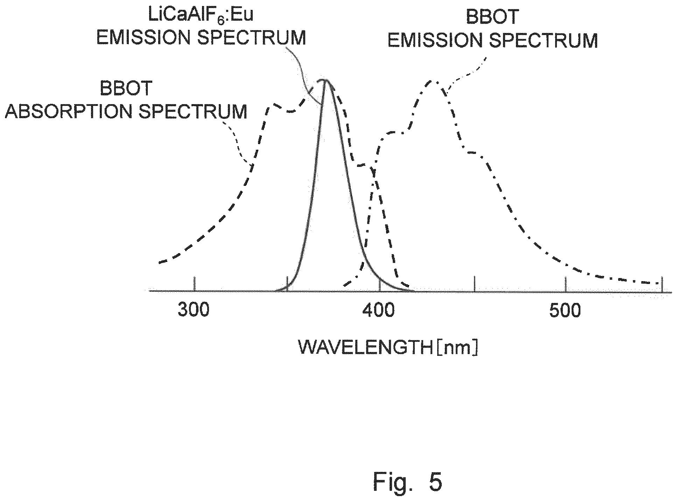

Fig. 5 is a graph showing the emission spectrum of the neutron fluorescent substance LiCaAlF₆:Eu, and the absorption and emission spectra of the wavelength-shifting fluorescent substance BBOT. As shown in Fig. 5, there is a large overlap between the scintillation emission spectrum of the neutron fluorescent substance and the absorption spectrum of the wavelength-shifting fluorescent substance. When neutron radiation was applied to the plastic scintillating fiber according to the Example 1, sufficient quantity of light could be observed at the tip of the fiber which was 10 m away from the application point of the radiation.

### <Example 2>

Similarly to the Example 1, a cylindrical body for an outermost peripheral layer having an outer diameter of 50 mm and an inner diameter of 40 mm (i.e., the first cylindrical body 11 in Fig. 3) was formed. Further, similarly to the Example 1, a rod for a core having a diameter of 28 mm, made of polystyrene (having a refractive index 1.59) (i.e., the rod 12 in Fig. 3) and a cylindrical body for a cladding layer having an outer diameter of 33 mm and an inner diameter of 30 mm, made of polymethyl methacrylate (having a refractive index of 1.49) (i.e., the second cylindrical body 13 in Fig. 3) were prepared. In the rod for the core, BBOT was dissolved as a wavelength-shifting fluorescent substance at a concentration of 300 mass ppm.

Further, in the Example 2, a cylindrical body for an outer cladding layer having an outer diameter of 38 mm and an inner diameter of 35 mm, made of a copolymer of a fluorinated monomer such as perfluoroalkyl acrylate (having a refractive index 1.42) (not shown) was prepared. The cylindrical body for the outer cladding layer will constitute the cladding layer 4 shown in Fig. 2 after the drawing process.

Then, a preform was manufactured by inserting the cylindrical body for the outer cladding layer into the cylindrical body for the outermost peripheral layer, inserting the cylindrical body for the inner cladding layer into the cylindrical body for the outer cladding layer, and inserting the rod for the core into the cylindrical body for the inner cladding layer.

A plastic scintillating fiber according to the Example 2 was obtained by integrally drawing, while heating the tip of the preform, the preform under a reduced pressure so that the outer diameter of the drawn thread became 1 mm. This plastic scintillating fiber had the cross-sectional structure shown in Fig. 2. The outer diameter was 1,000 µm, and the outer diameter of the cladding layer 4 was 754 µm. The outer diameter of the cladding layer 3 was 682 µm, and the diameter of the core 2 was 612 µm. The thickness of the outermost peripheral layer 1 was 123 µm, and the thickness of the cladding layer 4 was 36 µm. Further, the thickness of the cladding layer 3 was 35 µm.

When neutron radiation was applied to the plastic scintillating fiber according to the Example 2, quantity of light 30% higher than that in the Example 1 could be observed at the tip of the fiber 10 m away from the application point of the radiation. It is considered that although the diameter of the core 2 became smaller than that in the Example 1, the total reflection angle became wider by the provision of the cladding layer 4 having a lower refractive index, so that more intense light was obtained.

### <Example 3>

After mixing and kneading fine particles of an inorganic fluorescent substance ZnS:Ag, which emits scintillation light by heavy-particle radiation such as alpha radiation, in polymethyl methacrylate, a cylindrical body for an outermost peripheral layer having an outer diameter of 50 mm and an inner diameter of 40 mm (i.e., the first cylindrical body 11 in Fig. 3) was formed. The average particle diameter of the fine particles was 5.3 µm and the concentration of the fine particles was 25 mass%.

A rod for a core having a diameter of 32 mm, made of polystyrene (having a refractive index 1.59) (i.e., the rod 12 in Fig. 3) and a cylindrical body for a cladding layer having an outer diameter of 38 mm and an inner diameter of 34 mm, made of polymethyl methacrylate (having a refractive index of 1.49) (i.e., the second cylindrical body 13 in Fig. 3) were prepared. In the rod for the core, HOSTASOLE YELLOW 3G was dissolved as a wavelength-shifting fluorescent substance at a concentration of 300 mass ppm.

As shown in Fig. 3, a preform was manufactured by inserting the cylindrical body for the cladding layer into the cylindrical body for the outermost peripheral layer and inserting the rod for the core into the cylindrical body for the cladding layer. A plastic scintillating fiber according to the Example 3 was obtained by integrally drawing, while heating the tip of the preform, the preform under a reduced pressure so that the outer diameter of the drawn thread became 1 mm. This plastic scintillating fiber had the cross-sectional structure shown in Fig. 1. The outer diameter was 1,000 µm, and the diameter of the cladding layer 3 was 770 µm. The diameter of the core 2 was 680 µm, and the thickness of the outermost peripheral layer 1 was 115 µm. Further, the thickness of the cladding layer 3 was 45 µm.

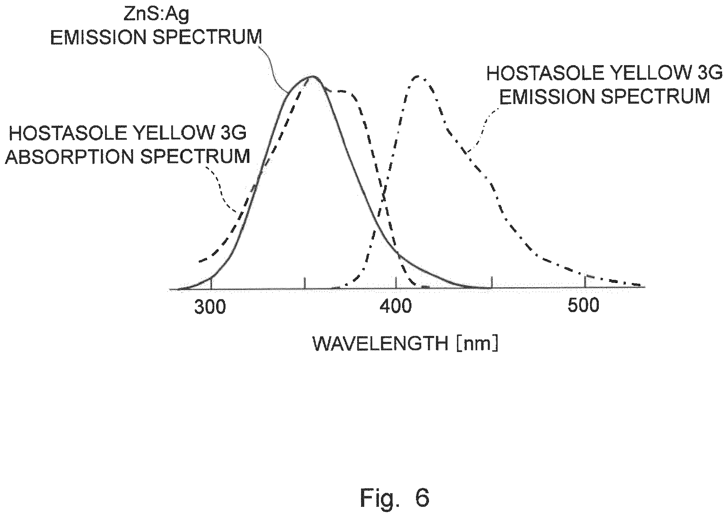

Fig. 6 is a graph showing the emission spectrum of the inorganic fluorescent substance ZnS:Ag, and the absorption and emission spectra of the wavelength-shifting fluorescent substance HOSTASOLE YELLOW 3G. As shown in Fig. 6, there is a large overlap between the scintillation emission spectrum of the inorganic fluorescent substance and the absorption spectrum of the wavelength-shifting fluorescent substance. When alpha radiation was applied to the plastic scintillating fiber according to the Example 3, sufficient quantity of light could be observed at the tip of the fiber which was 10 m away from the application point of the radiation.

### <Example 4>

A wavelength shifting fiber having a diameter of 770 µm, composed of a core 2 having a diameter of 680 µm, made of polystyrene (having a refractive index 1.59) containing 2,5-bis-(5-t-butyl-benzoxazoyl)-thiophene (BBOT) at a concentration of 200 mass ppm (BBOT), and a cladding layer 3 having a thickness of 45 µm, made of polymethyl methacrylate (having a refractive index 1.49) was prepared. A paint in which 7 mass% of an acrylic resin and 3 mass% of fine particles of a neutron fluorescent substance LiCaAlF₆:Eu were dissolved in 90 mass% of methyl ethyl ketone was applied to the surface of the above-described wavelength shifting fiber by a dip method, and the applied paint was dried. As a result, an outermost peripheral layer 1 having a thickness of 115 µm was formed, and hence a plastic scintillating fiber having an outer diameter of 1,000 µm according to the Example 4 was obtained. When neutron radiation was applied to the plastic scintillating fiber according to the Example 4, sufficient quantity of light could be observed at the tip of the fiber which was 10 m away from the application point of the radiation.

The present invention is not limited to the above-described embodiments, and they may be modified as desired without departing from the scope and spirit of the present invention.

This application is based upon and claims the benefit of priority from Japanese patent application No. 2019-198101, filed on October 31, 2019, the entire disclosure of which is incorporated herein in its entirety by reference.

### Reference Signs List

- 1: OUTERMOST LAYER
- 2: CORE
- 3: CLADDING LAYER (INNER CLADDING LAYER)
- 4: CLADDING LAYER (OUTER CLADDING LAYER)
- 11: FIRST CYLINDRICAL BODY
- 12: ROD
- 13: SECOND CYLINDRICAL BODY
- PSF: PLASTIC SCINTILLATING FIBER

## Claims

1. A plastic scintillating fiber comprising:
an outermost peripheral layer containing a material that emits scintillation light when it is irradiated with at least one of neutron radiation and heavy-particle radiation;
a core disposed inside the outermost peripheral layer and containing at least one type of fluorescent substance that absorbs the scintillation light and wavelength-converts the absorbed light into light having a wavelength longer than that of the absorbed light; and
a cladding layer covering an outer peripheral surface of the core and having a refractive index lower than that of the core, wherein
a wavelength shifting fiber including the core and the cladding layer, and the outermost peripheral layer covering an outer peripheral surface of the wavelength shifting fiber are integrally formed.

2. The plastic scintillating fiber according to Claim 1, wherein
the material is fine particles of an inorganic fluorescent substance, and
the outermost peripheral layer is made of a transparent resin in which the fine particles are dispersed.

3. The plastic scintillating fiber according to Claim 1 or 2,
wherein the wavelength shifting fiber and the outermost peripheral layer are integrally formed by a drawing process.

4. The plastic scintillating fiber according to any one of Claims 1 to 3, wherein the cladding layer has a multi-cladding structure comprising:
an inner cladding layer; and
an outer cladding layer covering an outer peripheral surface of the inner cladding layer and having a refractive index lower than that of the inner cladding layer.

5. A method for manufacturing a plastic scintillating fiber,
the plastic scintillating fiber comprising:
an outermost peripheral layer containing a fluorescent substance that emits scintillation light when it is irradiated with at least one of neutron radiation and heavy-particle radiation;
a core disposed inside the outermost peripheral layer and containing at least one type of fluorescent substance that absorbs the scintillation light and wavelength-converts the absorbed light into light having a wavelength longer than that of the absorbed light; and
a cladding layer covering an outer peripheral surface of the core and having a refractive index lower than that of the core, and
the method comprising:
a process of manufacturing a preform by inserting a second cylindrical body for the cladding layer into a first cylindrical body for the outermost peripheral layer, and inserting a rod for the core into the second cylindrical body; and
a process of drawing the preform while heating the preform.

6. A method for manufacturing a plastic scintillating fiber,
the plastic scintillating fiber comprising:
an outermost peripheral layer containing a fluorescent substance that emits scintillation light when it is irradiated with at least one of neutron radiation and heavy-particle radiation;
a core having a high refractive index, disposed inside the outermost peripheral layer, and containing at least one type of fluorescent substance that absorbs the scintillation light and wavelength-converts the absorbed light into light having a wavelength longer than that of the absorbed light; and
a cladding layer covering an outer peripheral surface of the core and having a refractive index lower than that of the core, wherein
the outermost peripheral layer is coated on a surface of the cladding layer.
